# EUROPEAN PATENT SPECIFICATION

(11) **EP 2 590 359 B1**
(45) Date of publication and mention of the grant of the patent: **15.11.2017**
(21) Application number: 11780115.9
(22) Date of filing: 21.04.2011
(51) Int. Cl.: H04L 12/14

(54) **METHOD, SYSTEM, CHARGING EQUIPMENT, AND ACCOUNT BALANCE MANAGEMENT CENTER FOR FREE RESOURCES PROCESSING**
VERFAHREN, SYSTEM, LADEVORRICHTUNG UND KONTENAUSGLEICHSVERWALTUNGSZENTRUM ZUR VERARBEITUNG FREIER RESSOURCEN
PROCÉDÉ, SYSTÈME, ÉQUIPEMENT DE FACTURATION ET CENTRE DE GESTION DE SOLDE DE COMPTE POUR TRAITEMENT DE RESSOURCES GRATUITES

(30) Priority: 30.06.2010 CN 201010219151
(43) Date of publication of application: 08.05.2013
(73) Proprietor: Huawei Technologies Co., Ltd., Longgang District Shenzhen, Guangdong 518129 (CN)
(72) Inventor: RONG, Chuanxiang, Shenzhen Guangdong 518129 (CN)
(74) Representative: Goddar, Heinz J.
(86) International application number: PCT/CN2011/073103
(87) International publication number: WO 2011/140894

(56) References cited:
- EP-A1- 2 161 874
- WO-A2-2007/140007
- CN-A- 101 035 002
- CN-A- 101 094 083
- CN-A- 101 136 758
- US-A1- 2007 005 764
- "3rd Generation Partnership Project; Technical Specification Group Services and System Aspects; Telecommunication management; Charging management; Rc reference point study (Release 10)", 3GPP STANDARD; 3GPP TR 32.825, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 6 April 2010 (2010-04-06), pages 1-22, XP050402471, [retrieved on 2010-04-06]
- HUAWEI: "Add message types on Rc reference point to baseline", 3GPP DRAFT; S5-092133 ADD MESSAGE TYPES ON RC REFERENCE POINT TO BASELINE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Hangzhou; 20090402, 2 April 2009 (2009-04-02), XP050348417, [retrieved on 2009-04-02]
- LI YUAN: 'Design of CDMA2000 convergent online charging system' CHINESE MASTER'S THESES FULL-TEXT DATABASE no. 12, December 2009, ISSN 1674-0246 pages 18 - 30
- KUANG LINGHONG: 'Research of online charging system based on 3G' CHINESE MASTER'S THESES FULL-TEXT DATABASE April 2010, pages 23 - 39, XP008167363

## Description

### FIELD OF THE INVENTION

Embodiments of the present invention relate to the field of communications technologies, and in particular, to a method, a system, a charging apparatus, and an account balance management center for processing free resources.

### BACKGROUND OF THE INVENTION

A charging function in a conventional network, based on different types of service systems such as voice, data, and multimedia content, is usually developed longitudinally in parallel with the service systems. As a result, services are isolated from each other in charging. Online charging and offline charging are implemented by adopting completely different mechanisms, and as a result, customer segmentation and marketing strategies are affected by a natural barrier between prepayment and postpayment.

An independent ABM (Account Balance Management, account balance management center) unifies account management, and an account managed by the ABM is able to be accessed by multiple charging systems. The account management and storage functions do not need to be implemented inside each charging system, which reduces the management cost, facilitates switching of charging manners supported by each charging system, and facilitates implementation of convergent billing.

A preference capability is a basic promotion means of a telecom operator. The basic method of preference is to present free resources and bonus funds to users and provide rich scenarios by limiting scenarios. If free resources exist in a user account book, before performing rating, an OCS (Online charging system, online charging system) applies to the ABM for reserving free resources. When finding that free resources are insufficient, the ABM reserves only the remaining free resources and returns success. In this situation, the OCS performs rating by using a difference between the usage that is applied for and the reserved usage, and sends the rated cost to the ABM so that reservation is performed again. That is, when free resources are insufficient, the OCS and the ABM need to interact at least twice before reservation or cost deduction is completed, which affects charging efficiency and timeliness.

EP 2161874 A1 discloses that a service charging method, comprising: a data service management device receiving the current communication service scene information of a user forwarded by a service engine/gateway; and based on the current communication service scene information of the user, in the corresponding relationship of the pre-stored communication service scene and the charging priorities for the various accounts, searching for the priorities information for charging in the various accounts, the various accounts including the various free accounts of the user; based on the searched priorities information, charging for the pre-stored various accounts of the user in order, and forwarding a charging result to the intelligent network; based on the charging result forwarded, deducting the cost of the pre-stored various accounts of the user in order by the intelligent network.

"3rd Generation Partnership Project; Technical Specification Group Services and System Aspects; Telecommunication management; Charging management; Rc reference Point study (Release 10)" 3GPP STANDARD; 3GPP TR 32.825, no. V10.0.0, 2010-04-06, discloses an Online Charging System (OCS) architecture and a message flow between Online Charging Function (OCF) and Account Balance Management Function (ABMF).

"HUAWEI: "Add message types on Rc reference point to baseline", 3GPP DRAFT; S5-092133, 2009-04-02, discloses a message exchange between an Online Charging Function (OCF) and an Account Balance Management Function (ABMF).

### SUMMARY OF THE INVENTION

Embodiments of the present invention provide a method, an apparatus, and a system for processing free resources, so as to solve a technical problem in the prior art that charging efficiency is affected due to many interactions between an ABM and an OCS in prepaid charging. An embodiment of the present invention provides a method for processing free resources, including:
receiving a credit control request sent by a front-end device, where the credit control request includes a service unit that is applied for and a user identifier;
determining, according to the user identifier, that the current request meets a free resource processing condition, and generating a free resource account item comprising the service unit that is applied for;
performing rating processing on the service unit that is applied for and generating a cash account item comprising an amount obtained by performing rating on the service unit that is applied for; and
sending a credit control request carrying the cash account item and the free resource account item to an account balance management center, so that the account balance management center performs cost accounting according to the cash account item and the free resource account item.

An embodiment of the present invention provides another method for processing free resources, including:
receiving a credit control request sent by a charging apparatus, where the credit control request includes a cash account item comprising an amount obtained by performing rating on a service unit that is applied for and a free resource account item comprising the service unit that is applied for;
performing cost accounting according to the cash account item and the free resource account item; and
sending a credit control response to the charging apparatus, where the credit control response includes a service unit on which the accounting has been performed.

An embodiment of the present invention provides a charging apparatus, including:
a receiving unit, configured to receive a credit control request sent by a front-end device, where the credit control request includes a service unit that is applied for and a user identifier;
a free resource account item generating unit, configured to determine, according to the user identifier, that the current request meets a free resource processing condition, and generate a free resource account item comprising the service unit that is applied for;
a cash account item generating unit, configured to perform rating processing on the service unit that is applied for and generate a cash account item comprising an amount obtained by performing rating on the service unit that is applied for; and
a sending unit, configured to send a credit control request carrying the cash account item and the free resource account item to an account balance management center, so that the account balance management center performs cost accounting according to the cash account item and the free resource account item.

An embodiment of the present invention provides an account balance management center, including:
a receiving unit, configured to receive a credit control request sent by a charging apparatus, where the credit control request includes a cash account item comprising the service unit that is applied for and a free resource account item comprising an amount obtained by performing rating on the service unit that is applied for;
an accounting unit, configured to perform cost accounting according to the cash account item and the free resource account item; and
a sending unit, configured to send a credit control response to the charging apparatus, where the credit control response includes a service unit on which the accounting has been performed.

An embodiment of the present invention provides a system for processing free resources, including:
a charging apparatus, configured to receive a credit control request sent by a front-end device, where the credit control request includes a service unit that is applied for and a user identifier; determine, according to the user identifier, that the current request meets a free resource processing condition, and generate a free resource account item comprising the service unit that is applied for; perform rating processing on the service unit that is applied for and generate a cash account item comprising an amount obtained by performing rating on the service unit that is applied for; and send a credit control request carrying the cash account item and the free resource account item to an account balance management center, so that the account balance management center performs cost accounting according to the cash account item and the free resource account item; and
the account balance management center, configured to receive the credit control request sent by the charging apparatus, where the credit control request includes the cash account item and the free resource account item; perform cost accounting according to the cash account item and the free resource account item; and send a credit control response to the charging apparatus, where the credit control response includes a service unit on which the accounting has been performed.

The charging apparatus in the embodiments of the present invention generates, according to a charging policy, a free resource list as the charging apparatus determines that a condition for using free resources is met, performs rating processing on the usage that is applied for to obtain a cash account item list, and sends a CCR carrying the free resource list and the cash account item list to the ABM. When the balance of a free resource account book is 0, a cash account book is directly used to perform the cost accounting, without requiring the ABM to send a message to the OCS again, thereby decreasing message interactions between the OCS and the ABM, reducing ratings of the OCS, and improving the charging efficiency.

### BRIEF DESCRIPTION OF THE DRAWINGS

To make the technical solutions of the embodiments of the present invention clearer, the accompanying drawings used in the description of the embodiments are briefly described below. Evidently, the accompanying drawings illustrate only some embodiments of the present invention and persons of ordinary skill in the art can obtain other accompanying drawings based on these accompanying drawings without creative efforts.

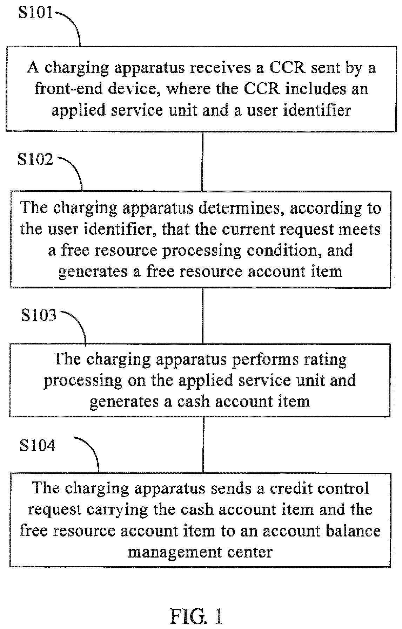

FIG. 1 is a flowchart of a method for processing free resources according to an embodiment of the present invention;
FIG. 2 is a flowchart of another method for processing free resources according to an embodiment of the present invention;
FIG. 3 is a flowchart of still another method for processing free resources according to an embodiment of the present invention;
FIG. 4 is a schematic structural diagram of a charging apparatus according to an embodiment of the present invention;
FIG. 5 is a schematic structural diagram of an account balance management center according to an embodiment of the present invention; and
FIG. 6 is a schematic structural diagram of a system for process free resources according to an embodiment of the present invention.

### DETAILED DESCRIPTION OF THE EMBODIMENTS

The technical solutions of the embodiments of the present invention are further described below with reference to the accompanying drawings and specific embodiments.

An embodiment of the present invention discloses a prepaid charging method, including the following steps:
S101: A charging apparatus receives a CCR (Credit Control Request, credit control request) sent by a front-end device, where the CCR includes a service unit that is applied for and a user identifier.

When the CCR is used for applying for resource reservation, the CCR carries an RSU (requested service unit, requested service unit) and a user identifier. According to different specific services, there may be many forms of service units, for example, a duration of a conversation requested to be reserved, traffic requested to be reserved, the total number of bytes requested to be reserved, the number of input bytes requested to be reserved, the number of output bytes requested to be reserved, or another special metric unit requested to be reserved. The front-end device may include apparatuses such as an SCP and a GGSN.

When the CCR is used for cost deduction, the CCR carries a USU (Used service unit, used service unit) and the user identifier. According to different specific services, there may be many forms of service units, for example, a duration of a conversation, used traffic, the total number of used bytes, the number of used input bytes, the number of used output bytes, or another used special metric unit.

Service units that are applied for include the requested service unit and the used service unit.

S102: The charging apparatus determines, according to the user identifier, that the current request meets a free resource processing condition, and generates a free resource account item. The charging apparatus obtains the current charging scenario according to the user identifier, obtains charging-related information in the current charging scenario, judges, according to the charging information, whether the CCR meets the free resource processing condition, and if so, generates the free resource account item, where the free resource account item may be specifically a free resource list, which includes the service unit that is applied for.

S103: The charging apparatus performs rating on the service unit that is applied for and generates a cash account item.

The cash account item may be specifically a cash account item list, where the cash account item list includes an amount obtained by performing rating on the service unit that is applied for.

S104: The charging apparatus sends a credit control request carrying the cash account item and the free resource account item to an account balance management center, so that the account balance management center performs cost accounting according to the cash account item and the free resource account item.

The charging apparatus receives a credit control response sent by the account balance management center, where the credit control response includes a service unit on which the accounting has been performed.

The charging apparatus in this embodiment of the present invention generates, according to a charging policy, a free resource list (for example, the free resource list includes the service unit that is applied for) as the charging apparatus determines that a condition for using free resources is met, performs rating on the service unit that is applied for to obtain a cash account item list, and sends a CCR carrying the free resource list and the cash account item list to the ABM. When the balance of a free resource account book is 0, a cash account book is directly used to perform cost reservation, without requiring the ABM to send a message to an OCS again, thereby decreasing message interactions between the OCS and the ABM, reducing ratings of the OCS, and improving charging efficiency.

An embodiment of the present invention discloses another prepaid charging method, including the following steps:
S201: An ABM receives a credit control request sent by a charging apparatus, where the credit control request includes a cash account item and a free resource account item.

The cash account item may be specifically a cash account item list, where the cash account item list includes an amount obtained by performing rating on a service unit that is applied for. The free resource account item may be specifically a free resource list, which includes the service unit that is applied for.

S202: The ABM performs cost accounting according to the cash account item and the free resource account item.

If a remaining service unit in a free resource account book is greater than the service unit that is applied for, free resource is used for cost accounting, and in this situation, a service unit on which the accounting has been performed is equal to the service unit that is applied for; if the remaining service unit in the free resource account book is smaller than the service unit that is applied for, free resource is used for cost accounting, and in this situation, the service unit on which the accounting has been performed is equal to the remaining service unit in the free resource account book; and if the remaining service unit in the free resource account book is zero, a cash account book is used for cost accounting.

S203: The ABM sends a credit control response to the charging apparatus, where the credit control response includes the service unit on which the accounting has been performed.

The service unit on which the accounting has been performed may be represented by a GSU (granted service unit, granted service unit), which is sometimes referred to as a granted unit.

The charging apparatus in this embodiment of the present invention generates, according to a charging policy, a free resource list as the charging apparatus determines that a condition for using free resources is met, performs rating on the usage that is applied for to obtain a cash account item list, and sends a CCR carrying the free resource list and the cash account item list to the ABM. When the balance of the free resource account book is 0, the cash account book is directly used to perform cost reservation, without requiring the ABM to send a message to an OCS again so that the OCS performs second-time reservation. In this way, message interactions between the OCS and the ABM are decreased, ratings of the OCS are reduced, and charging efficiency is improved.

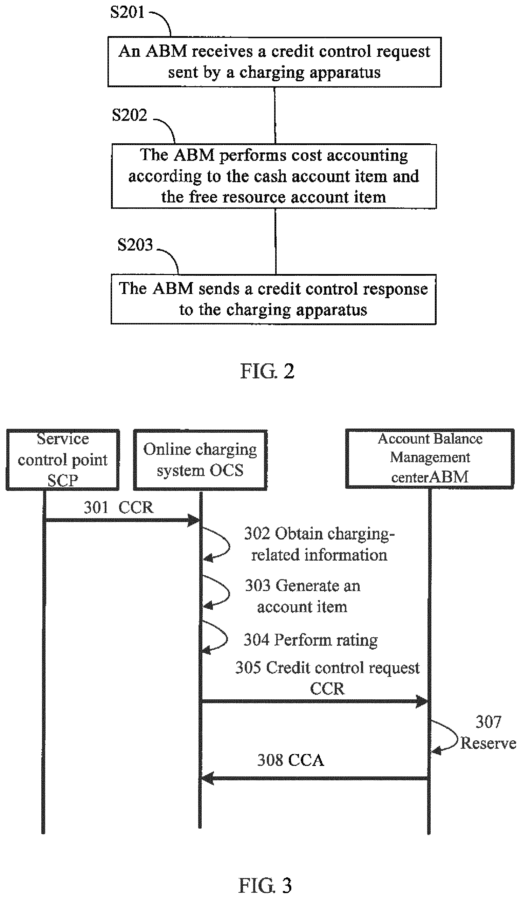

In this embodiment of the present invention, when free resources exist in the user account book, for example, in an application scenario shown in FIG. 3, 25 remaining minutes exist in the free resource account book, conditions for using the free resource account book include the following: The current call is a local voice call and home locations of a calling party and a called party are the same; a duration that is applied for the current charging is 5 minutes; a charging rate for conversation time is 0.5 yuan per minute; and the balance of the cash account book of the user is 50 yuan. In this case, the specific process of a charging method for processing free resources is as follows.

S301: An OCS receives a CCR that is sent by a front-end device and is used for applying for duration reservation, where the CCR includes a reserved duration that is applied for and a user identifier of a charged user, the user identifier may be a mobile phone number, or a short number, and other identifier information that is capable of uniquely identifying the charged user, and the reserved duration that is applied for is 5 minutes.

The front-end device may be an SCP (Service Control Point, service control point), and may also be a control device such as a GGSN (Gateway GPRS Support Node, gateway GPRS support node).

S302: According to the user identifier, the OCS obtains charging-related information.

In processes of performing rating and charging, the charging-related information needs to be known. For example, the OCS receives a reserved duration that the calling party applies for, and therefore a home location of the calling party needs to be obtained. The home location of the calling party may be determined by analyzing a number segment of a calling number, for example, in 13828888***, the number segment 13828888 is determined to belong to Shenzhen, and thereby an area code 0755 is obtained; meanwhile, charging-related information such as a visited location of the calling party and a home location of the called party may also be obtained.

S303: The OCS judges, according to the charging-related information, whether resources that are applied for in the current CCR meet a condition for using free resources; when determining that the current CCR meets the condition for using free resources, the OCS generates an account item according to the reserved duration that is applied for.

Because the current call being applied for is a voice charging time event, the call type is a calling type, and the visited location of the calling party is the same as the home location of the called party, that is, the calling party and the called party are local users, the charging-related information of the current CCR meets the condition for using free resources and a stipulation for using a free resource account book. In this situation, the OCS generates a free resource list according to the reserved duration that is applied for, where the free resource list indicates the account item of free resources that are requested to be reserved and the free resource list includes three fields: Request-Acct-Item indicating an account item requested to be reserved, and indicating the account item of free resources that are requested to be reserved herein; Acct-Item-Type-Id indicating an account type identifier, for example, account type identifier 1 indicating the account item of free resources; Requested-Service-Unit indicating the usage requested to be reserved, and being 5 minutes herein. The details are as shown in Table 1.

**Table 1**

| [Request-Acct-Item] | Account item of free resources that are requested to be reserved |
|---|---|
| Acct-Item-Type-Id | 1 |
| [Requested-Service-Unit] | 5 minutes |

S304: Perform rating processing according to the service unit carried in the CCR to obtain a rating result.

The OCS performs corresponding rating according to the reserved duration that is applied for by using a charging rate corresponding to a cash account book. For example, the charging rate of the cash account book is 0.5 yuan per minute, and the reserved duration that is applied for is 5 minutes; in this case, the required cost obtained by performing rating is 5 minutes x 0.5 yuan per minute = 2.5 yuan. In this situation, a cash account item list is generated, where the cash account item list includes three fields: Request-Acct-Item indicating the account item requested to be reserved, and indicating a cash account item requested to be reserved herein; Acct-Item-Type-Id indicating the account type identifier, for example, account type identifier 2 indicating a cash account item; Requested-Service-Unit indicating the usage requested to be reserved, and being 2.5 yuan herein. The details are as shown in Table 2.

**Table 2**

| [Request-Acct-Item] | Account item of a cash account book requested to be reserved |
|---|---|
| Acct-Item-Type-Id | 2 |
| [Requested-Service-Unit] | 2.5 yuan |

Herein the account type identifiers 1 and 2 are only taken as examples, and in an actual application, a setting may be performed according to an actual requirement.

S305: After successfully performing rating, the OCS sends a CCR to the ABM, where the CCR carries the free resource list and the cash account item list.

S306: After receiving the CCR, the ABM performs resource reservation according to the free resource list and the cash account item list.

During resource reservation, according to the free resource list, the ABM may know that the resources requested to be reserved are free resources, and that the free resources are 5 minutes, and query the free resource account book to find 25 remaining minutes of free resources. Therefore, the free resources are sufficient, and the free resources are directly reserved, and a CCA message is returned to the OCS, where the CCA message carries a granted duration of 5 minutes, that is, the granted duration is the same as the reserved duration that is applied for.

If the remaining duration of the free resource account book in this situation is shorter than the reserved duration that is applied for, all remaining free resources are reserved, and a CCA message is returned to the OCS, where the CCA message carries an overall granted free durations, that is, the granted duration is the same as the remaining duration of the free resource account book.

If the balance of the free resource account book in this situation is zero, the cash account item list is used to perform resource reservation, the amount 2.5 yuan that is applied for is reserved in the cash account book, and a CCA message is returned to the OCS, where the CCA message carries the granted duration of 5 minutes, that is, the granted duration is the same as the reserved duration that is applied for.

S307: The OCS receives the CCA sent by the ABM, extracts the granted duration, and sends a CCA carrying the granted duration to the front-end device; if the granted duration is shorter than the reserved duration that is applied for, it is indicated that the fund account does not need to be deducted, and a client cannot be told that it is already the last time slice.

If the CCR sent by the SCP in S301 carries a USU, that is, the SCP applies for performing actual cost deduction, the cost deduction procedure is the same as the procedure in step S301 to step S305, and is not described herein.

The OCS determines that the condition for using free resources is met, generates the free resource list, performs rating on the usage that is applied for to obtain the cash account item list, and sends the CCR carrying the free resource list and the cash account item list to the ABM. When the balance of the free resource account book is 0, the cash account book is directly used to perform cost reservation, without requiring the ABM to send a message to the OCS again, thereby decreasing message interactions between the OCS and the ABM, reducing ratings of the OCS, improving charging efficiency, and implementing precise cost reservation.

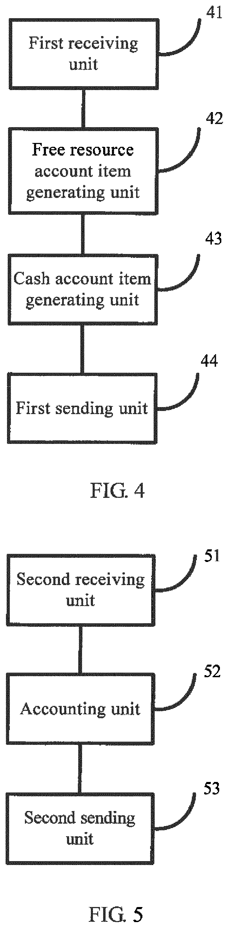

As shown in FIG. 4, an embodiment of the present invention also provides a charging apparatus, including: a first receiving unit 41, a free resource account item generating unit 42, a cash account item generating unit 43, and a first sending unit 44.

The first receiving unit 41 is configured to receive a credit control request sent by a front-end device, where the credit control request includes a service unit and a user identifier.

When the CCR is used for applying for resource reservation, the CCR carries an RSU and a user identifier. According to different specific services, there may be many forms of service units, for example, time of a conversation requested to be reserved, traffic requested to be reserved, the total number of bytes requested to be reserved, the number of input bytes requested to be reserved, the number of output bytes requested to be reserved, or another special metric unit requested to be reserved.

When the CCR is used for cost deduction, the CCR carries a USU and the user identifier. According to different specific services, there may be many forms of service units, for example, time of a conversation, used traffic, the total number of used bytes, the number of used input bytes, the number of used output bytes, or another used special metric unit.

The free resource account item generating unit 42 is configured to determine, according to the user identifier, that the current request meets a free resource processing condition, and generate a free resource account item.

The free resource account item generating unit 42 obtains charging-related information according to the user identifier, and judges, according to the charging information, whether the current request meets the free resource processing condition, and if so, generates a free resource account item, where the free resource account item may be specifically a free resource list, which includes the service unit that is applied for.

The cash account item generating unit 43 is configured to perform rating processing on the service unit that is applied for and generate a cash account item,
where the cash account item may be specifically a cash account item list, and the cash account item list includes an amount obtained by performing rating on the
service unit.

The first sending unit 44 is configured to send a credit control request carrying the cash account item and the free resource account item to an account balance management center, so that the account balance management center performs cost accounting according to the cash account item and the free resource account item.

For the service unit that is applied for, the cash account item, the free resource account item, and the specific work process involved in this embodiment of the present invention, reference may be made to the related content disclosed in the embodiments involved in FIG. 2 and FIG. 3. Details are not repeated herein.

As shown in FIG. 5, an embodiment of the present invention further provides an account balance management center, including a second receiving unit 51, an accounting unit 52, and a second sending unit 53.

The second receiving unit 51 is configured to receive a credit control request sent by a charging apparatus, where the credit control request includes a cash account item and a free resource account item.
The cash account item may be specifically a cash account item list, the cash account item list includes an amount obtained by performing rating on a service unit, and the free resource account item may be specifically a free resource list, which includes a service unit that is applied for.

The accounting unit 52 is configured to perform cost accounting according to the cash account item and the free resource account item.
If a remaining service unit in a free resource account book is greater than the service unit that is applied for, use free resources for cost accounting, and in this situation a service unit on which the accounting has been performed is equal to the service unit that is applied for; if the remaining service unit in the free resource account book is smaller than the service unit that is applied for, use free resources for cost accounting, and in this situation the service unit on which the accounting has been performed are equal to the remaining service unit in the free resource account book; and if the remaining service unit in the free resource account book is zero, use a cash account book for cost accounting.
The second sending unit 53 is configured to send a credit control response to the charging apparatus, where the credit control response includes the service unit on which the accounting has been performed.

For the service unit that is applied for, the cash account item, the free resource account item, and the specific work process involved in this embodiment of the present invention, reference maybe referred to the related content disclosed in the embodiments involved in FIG. 2 and FIG. 3. Details are not repeated herein.

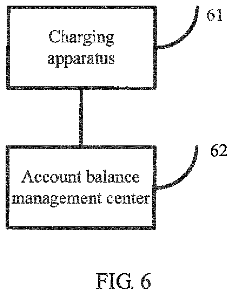

As shown in FIG. 6, an embodiment of the present invention further provides a prepaid charging system, including:
a charging apparatus 61, configured to receive a credit control request sent by a front-end device, where the credit control request includes a service unit that is applied for and a user identifier; determine, according to the user identifier, that the current request meets a free resource processing condition, and generate a free resource account item; perform rating processing on the service unit that is applied for and generate a cash account item; and send a credit control request carrying the cash account item and the free resource account item to an account balance management center, so that the account balance management center performs cost accounting according to the cash account item and the free resource account item; and
the account balance management center 62, configured to receive the credit control request sent by the charging apparatus, where the credit control request includes the cash account item and the free resource account item; perform cost accounting according to the cash account item and the free resource account item; and send a credit control response to the charging apparatus, where the credit control response includes a service unit on which the accounting has been performed.

For the service unit that is applied for, the cash account item, the free resource account item, and the specific work process involved in the embodiment of the present invention, reference may be made to the related content disclosed in the embodiments involved in FIG. 2 and FIG. 3. Details are not repeated herein.

An OCS determines that the condition for using free resources is met, generates a free resource list, performs rating processing on the usage that is applied for to obtain a cash account item list, and sends a CCR carrying the free resource list and the cash account item list to the ABM; and when the balance of a free resource account book is 0, a cash account book is directly used to perform cost conservation, without requiring the ABM to send a message to the OCS again, thereby decreasing message interactions between the OCS and the ABM, reducing ratings of the OCS, improving charging efficiency, and implementing precise cost reservation.

Persons of ordinary skill in the art may understand that all or part of the steps in the methods according to the embodiments may be implemented by hardware under the instruction of a program. The program may be stored in a computer readable storage medium and when the program runs, the steps in the methods according to the embodiments are performed. The storage medium includes any medium that is capable of storing program codes, such as a ROM, a RAM, a magnetic disk, or a CD-ROM.

Finally, it should be noted that the foregoing embodiments are intended for describing the technical solutions of the present invention, without imposing any limitation thereon. Although the present invention is described in detail with reference to the foregoing embodiments, persons of ordinary skill in the art should understand that they can still make modifications to the technical solutions described in the foregoing embodiments or make substitutions to some technical features thereof, without departing from the scope of the technical solutions of the embodiments of the present invention.

## Claims

1. A method for processing free resources, comprising:
receiving (s101) a credit control request sent by a front-end device, wherein the credit control request comprises a service unit that is applied for and a user identifier;
determining (s102), according to the user identifier, that the current request meets a free resource processing condition, and generating a free resource account item comprising the service unit that is applied for;
performing (s103) rating processing on the service unit that is applied for and generating a cash account item comprising an amount obtained by performing rating on the service unit that is applied for; and
sending (s104) a credit control request carrying the cash account item and the free resource account item to an account balance management center, so that the account balance management center performs cost accounting according to the cash account item and the free resource account item.

2. The method according to claim 1, further comprising: receiving a credit control response sent by the account balance management center, wherein the credit control response comprises a service unit on which the accounting has been performed.

3. A method for processing free resources, comprising:
receiving (S201) a credit control request sent by a charging apparatus, wherein the credit control request comprises a free resource account item comprising a service unit that is applied for and a cash account item comprising an amount obtained by performing rating on the service unit that is applied for;
performing (S202) cost accounting according to the cash account item and the free resource account item; and
sending (S203) a credit control response to the charging apparatus, wherein the credit control response comprises a service unit on which the accounting has been performed.

4. The method according to claim 3, wherein the performing cost accounting according to the cash account item and the free resource account item comprises: if a remaining service unit in a free resource account book is greater than the service unit that is applied for, using free resources for cost accounting, wherein the service unit on which the accounting has been performed is equal to the service unit that is applied for; if the remaining service unit in the free resource account book is smaller than the service unit that is applied for, using free resources for cost accounting, wherein the service unit on which the accounting has been performed is equal to the remaining service unit in the free resource account book; and if the remaining service unit in the free resource account book is zero, using a cash account book for cost accounting.

5. A charging apparatus, comprising:
a receiving unit (41), configured to receive a credit control request sent by a front-end device, wherein the credit control request comprises a service unit that is applied for and a user identifier;
a free resource account item generating unit (42), configured to determine, according to the user identifier, that the current request meets a free resource processing condition, and generate a free resource account item comprising the service unit that is applied for;
a cash account item generating unit (43), configured to perform rating processing on the service unit that is applied for and generate a cash account item comprising an amount obtained by performing rating on the service unit that is applied for; and
a sending unit (44), configured to send a credit control request carrying the cash account item and the free resource account item to an account balance management center, so that the account balance management center performs cost accounting according to the cash account item and the free resource account item.

6. An account balance management center, comprising:
a receiving unit (51), configured to receive a credit control request sent by a charging apparatus, wherein the credit control request comprises a cash account item comprising an amount obtained by performing rating on a service unit that is applied for and a free resource account item comprising the service unit that is applied for;
an accounting unit (52), configured to perform cost accounting according to the cash account item and the free resource account item; and
a sending unit (53), configured to send a credit control response to the charging apparatus, wherein the credit control response comprises a service unit on which the accounting has been performed.

7. A system for processing free resources, comprising:
a charging apparatus (61), configured to receive a credit control request sent by a front-end device, wherein the credit control request comprises a service unit that is applied for and a user identifier; determine, according to the user identifier, that the current request meets a free resource processing condition, and generate a free resource account item comprising the service unit that is applied for; perform rating processing on the service unit that is applied for and generate a cash account item comprising an amount obtained by performing rating on the service unit that is applied for; and send a credit control request carrying the cash account item and the free resource account item to an account balance management center, so that the account balance management center performs cost accounting according to the cash account item and the free resource account item; and
the account balance management center (62), configured to receive the credit control request sent by the charging apparatus, wherein the credit control request comprises the cash account item and the free resource account item; perform cost accounting according to the cash account item and the free resource account item; and send a credit control response to the charging apparatus, wherein the credit control response comprises a service unit on which the accounting has been performed.

## Patentansprüche

1. Verfahren zum Verarbeiten freier Ressourcen, das die folgenden Schritte umfasst:
Empfangen (s101) einer Guthabenkontrollanfrage, die von einer Vorstufenvorrichtung gesendet wurde, wobei die Guthabenkontrollanfrage eine Diensteinheit, die beantragt wird, und eine Benutzerkennung umfasst;
Bestimmen (s102), gemäß der Benutzerkennung, dass die aktuelle Anfrage eine Freieressourcenverarbeitungsbedingung erfüllt, und Erzeugen eines Freieressourcenkontoposteris, der die Diensteinheit, die beantragt wird, umfasst;
Durchführen (s103) von Einstufungsverarbeitung an der Diensteinheit, die beantragt wird, und Erzeugen eines Barkontopostens, der einen Betrag umfasst, der durch Durchführen einer Einstufung an der Diensteinheit, die beantragt wird, erhalten wird; und
Senden (s104) einer Guthabenkontrollanfrage, die den Barkontoposten und den Freieressourcenkontoposten führt, an ein Kontostandmanagementzentrum, so dass das Kontostandmanagementzentrum eine Kostenkontierung gemäß dem Barkontoposten und dem Freieressourcenkontoposten durchführt.

2. Verfahren nach Anspruch 1, das ferner den folgenden Schritt umfasst: Empfangen einer Guthabenkontrollantwort, die von dem Kontostandmanagementzentrum gesendet wurde, wobei die Guthabenkontrollantwort eine Diensteinheit umfasst, an der die Kontierung durchgeführt wurde.

3. Verfahren zum Verarbeiten freier Ressourcen, das die folgenden Schritte umfasst:
Empfangen (S201) einer Guthabenkontrollanfrage, die von einer Ladeeinrichtung gesendet wurde, wobei die Guthabenkontrollanfrage einen Freieressourcenkontoposten umfasst, der eine Diensteinheit, die beantragt wird, und einen Barkontoposten, der einen Betrag umfasst, der durch Durchführen einer Einstufung an der Diensteinheit, die beantragt wird, erhalten wird, umfasst;
Durchführen (S202) von Kostenkontierung gemäß dem Barkontoposten und dem Freieressourcenkontoposten; und
Senden (S203) einer Guthabenkontrollantwort an die Ladeeinrichtung, wobei die Guthabenkontrollantwort eine Diensteinheit umfasst, an der die Kontierung durchgeführt wurde.

4. Verfahren nach Anspruch 3, wobei das Durchführen von Kostenkontierung gemäß dem Barkontoposten und dem Freieressourcenkontoposten Folgendes umfasst: wenn eine verbliebene Diensteinheit in einem Freieressourcenkontobuch größer als die Diensteinheit, die beantragt wird, ist, Verwenden freier Ressourcen zum Kostenkontieren, wobei die Diensteinheit, an der die Kontierung durchgeführt wurde, gleich der Diensteinheit, die beantragt wird, ist; wenn die verbliebene Diensteinheit in dem Freieressourcenkontobuch kleiner als die Diensteinheit, die beantragt wird, ist, Verwenden freier Ressourcen zum Kostenkontieren, wobei die Diensteinheit, an der die Kontierung durchgeführt wurde, gleich der verbliebenen Diensteinheit in dem Freieressourcenkontobuch ist; und, wenn die verbliebene Diensteinheit in dem Freieressourcenkontobuch null ist, Verwenden eines Barkontobuchs zur Kostenkontierung.

5. Ladeeinrichtung, die Folgendes umfasst:
eine Empfangseinheit (41), die ausgelegt ist zum Empfangen einer Guthabenkontrollanfrage, die von einer Vorstufenvorrichtung gesendet wurde, wobei die Guthabenkontrollanfrage eine Diensteinheit, die beantragt wird, und eine Benutzerkennung umfasst;
eine Freieressourcenkontopostenerzeugungseinheit (42), die ausgelegt ist zum Bestimmen, gemäß der Benutzerkennung, dass die aktuelle Anfrage eine Freieressourcenverarbeitungsbedingung erfüllt, und zum Erzeugen eines Freieressourcenkontopostens, der die Diensteinheit, die beantragt wird, umfasst;
eine Barkontopostenerzeugungseinheit (43), die ausgelegt ist zum Durchführen von Einstufungsverarbeitung an der Diensteinheit, die beantragt wird, und zum Erzeugen eines Barkontopostens, der einen Betrag umfasst, der durch Durchführen einer Einstufung an der Diensteinheit, die beantragt wird, erhalten wird; und
eine Sendeeinheit (44), die ausgelegt ist zum Senden einer Guthabenkontrollanfrage, die den Barkontoposten und den Freieressourcenkontoposten führt, an ein Kontostandmanagementzentrum, so dass das Kontostandmanagementzentrum eine Kostenkontierung gemäß dem Barkontoposten und dem Freieressourcenkontoposten durchführt.

6. Kontostandmanagementzentrum, das Folgendes umfasst:
eine Empfangseinheit (51), die ausgelegt ist zum Empfangen einer Guthabenkontrollanfrage, die von einer Ladeeinrichtung gesendet wurde, wobei die Guthabenkontrollanfrage einen Barkontoposten umfasst, der einen Betrag umfasst, der durch Durchführen einer Einstufung an einer Diensteinheit, die beantragt wird, erhalten wird, und einen Freieressourcenkontoposten, der die Diensteinheit, die beantragt wird, umfasst;
eine Kontierungseinheit (52), die ausgelegt ist zum Durchführen von Kostenkontierung gemäß dem Barkontoposten und dem Freieressourcenkontoposten; und
eine Sendeeinheit (53), die ausgelegt ist zum Senden einer Guthabenkontrollantwort an die Ladeeinrichtung, wobei die Guthabenkontrollantwort eine Diensteinheit umfasst, an der die Kontierung durchgeführt wurde.

7. System zum Verarbeiten freier Ressourcen, das Folgendes umfasst:
eine Ladeeinrichtung (61), die ausgelegt ist zum Empfangen einer Guthabenkontrollanfrage, die von einer Vorstufenvorrichtung gesendet wurde, wobei die Guthabenkontrollanfrage eine Diensteinheit, die beantragt wird, und eine Benutzerkennung umfasst; zum Bestimmen, gemäß der Benutzerkennung, dass die aktuelle Anfrage eine Freieressourcenverarbeitungsbedingung verfüllt, und zum Erzeugen eines Freieressourcenkontopostens, der die Diensteinheit, die beantragt wird, umfasst; zum Durchführen von Einstufungsverarbeitung an der Diensteinheit, die beantragt wird, und zum Erzeugen eines Barkontopostens, der einen Betrag umfasst, der durch Durchführen einer Einstufung an der Diensteinheit, die beantragt wird, erhalten wird; und zum Senden einer Guthabenkontrollanfrage, die den Barkontoposten und den Freieressourcenkontoposten führt, an ein Kontostandmanagementzentrum, so dass das Kontostandmanagementzentrum eine Kostenkontierung gemäß dem Barkontoposten und dem Freieressourcenkontoposten durchführt; und
wobei das Kontostandmanagementzentrum (62) ausgelegt ist zum Empfangen der Guthabenkontrollanfrage, die von der Ladeeinrichtung gesendet wurde, wobei die Guthabenkontrollanfrage den Barkontoposten und den Freieressourcenkontoposten umfasst; zum Durchführen von Kostenkontierung gemäß dem Barkontoposten und dem Freieressourcenkontoposten; und zum Senden einer Guthabenkontrollantwort an die Ladeeinrichtung, wobei die Guthabenkontrollantwort eine Diensteinheit umfasst, an der die Kontierung durchgeführt wurde.

## Revendications

1. Procédé pour traiter des ressources gratuites, consistant :
à recevoir (s101) une requête de contrôle de crédit envoyée par un dispositif frontal, dans lequel la requête de contrôle de crédit comprend une unité de service qui est sollicitée et un identifiant d'utilisateur ;
à déterminer (s102), en fonction de l'identifiant d'utilisateur, que la requête actuelle répond à une condition de traitement de ressources gratuites, et à générer une écriture de compte de ressources gratuites comprenant l'unité de service qui est sollicitée ;
à effectuer (s103) un traitement d'évaluation sur l'unité de service qui est sollicitée, et à générer une écriture de compte de caisse comprenant un montant obtenu en réalisant une évaluation sur l'unité de service qui est sollicitée ; et
à envoyer (s104) une requête de contrôle de crédit comportant l'écriture de compte de caisse et l'écriture de compte de ressources gratuites à un centre de gestion de solde de compte de telle sorte que le centre de gestion de solde de compte réalise une comptabilité analytique en fonction de l'écriture de compte de caisse et de l'écriture de compte de ressources gratuites.

2. Procédé selon la revendication 1, consistant en outre : à recevoir une réponse de contrôle de crédit envoyée par le centre de gestion de solde de compte, dans lequel la réponse de contrôle de crédit comprend une unité de service sur laquelle la comptabilité a été réalisée.

3. Procédé pour traiter des ressources gratuites, consistant :
à recevoir (S201) une requête de contrôle de crédit envoyée par un appareil de facturation, dans lequel la requête de contrôle de crédit comprend une écriture de compte de ressources gratuites comprenant une unité de service qui est sollicitée, et une écriture de compte de caisse comprenant un montant obtenu en réalisant une évaluation sur l'unité de service qui est sollicitée ;
à réaliser (S202) une comptabilité analytique en fonction de l'écriture de compte de caisse et de l'écriture de compte de ressources gratuites ; et
à envoyer (S203) une réponse de contrôle de crédit à l'appareil de facturation, dans lequel la réponse de contrôle de crédit comprend une unité de service sur laquelle la comptabilité a été réalisée.

4. Procédé selon la revendication 3, dans lequel la réalisation de la comptabilité analytique en fonction de l'écriture de compte de caisse et de l'écriture de compte de ressources gratuites consiste : si une unité de service restante dans un livre comptable de ressources gratuites est plus importante que l'unité de service qui est sollicitée, à utiliser des ressources gratuites pour une comptabilité analytique, dans lequel l'unité de service sur laquelle la comptabilité a été réalisée est égale à l'unité de service qui est sollicitée ; si l'unité de service restante dans le livre comptable de ressources gratuites est plus petite que l'unité de service qui est sollicitée, à utiliser des ressources gratuites pour une comptabilité analytique, dans lequel l'unité de service sur laquelle la comptabilité a été réalisée, est égale à l'unité de service restante dans le livre comptable de ressources gratuites ; et si l'unité de service restante dans le livre comptable de ressources gratuites est zéro, à utiliser un livre comptable de caisse pour une comptabilité analytique.

5. Appareil de facturation, comprenant :
une unité de réception (41), configurée pour recevoir une requête de contrôle de crédit envoyée par un dispositif frontal, dans lequel la requête de contrôle de crédit comprend une unité de service qui est sollicitée et un identifiant d'utilisateur ;
une unité de génération d'écriture de compte de ressources gratuites (42), configurée pour déterminer, en fonction de l'identifiant d'utilisateur, que la requête actuelle répond à une condition de traitement de ressources gratuites, et pour générer une écriture de compte de ressources gratuites comprenant l'unité de service qui est sollicitée ;
une unité de génération d'écriture de compte de caisse (43), configurée pour effectuer un traitement d'évaluation sur l'unité de service qui est sollicitée, et pour générer une écriture de compte de caisse comprenant un montant obtenu en réalisant une évaluation sur l'unité de service qui est sollicitée ; et
une unité d'envoi (44), configurée pour envoyer une requête de contrôle de crédit comportant l'écriture de compte de caisse et l'écriture de compte de ressources gratuites, à un centre de gestion de solde de compte de telle sorte que le centre de gestion de solde de compte réalise une comptabilité analytique en fonction de l'écriture de compte de caisse et de l'écriture de compte de ressources gratuites.

6. Centre de gestion de solde de compte, comprenant :
une unité de réception (51), configurée pour recevoir une requête de contrôle de crédit envoyée par un appareil de facturation, dans lequel la requête de contrôle de crédit comprend une écriture de compte de caisse comprenant un montant obtenu en réalisant une évaluation sur une unité de service qui est sollicitée et une écriture de compte de ressources gratuites comprenant l'unité de service qui est sollicitée ;
une unité de comptabilité (52), configurée pour réaliser une comptabilité analytique en fonction de l'écriture de compte de caisse et de l'écriture de compte de ressources gratuites ; et
une unité d'envoi (53), configurée pour envoyer une réponse de contrôle de crédit à l'appareil de facturation, dans lequel la réponse de contrôle de crédit comprend une unité de service sur laquelle la comptabilité a été réalisée.

7. Système pour traiter des ressources gratuites, comprenant :
un appareil de facturation (61), configuré pour recevoir une requête de contrôle de crédit envoyée par un dispositif frontal, dans lequel la requête de contrôle de crédit comprend une unité de service qui est sollicitée, et un identifiant d'utilisateur ; déterminer, en fonction de l'identifiant d'utilisateur, que la requête actuelle répond à une condition de traitement de ressources gratuites, et générer une écriture de compte de ressources gratuites comprenant l'unité de service qui est sollicitée ; effectuer un traitement d'évaluation sur l'unité de service qui est sollicitée et générer une écriture de compte de caisse comprenant un montant obtenu en réalisant une évaluation sur l'unité de service qui est sollicitée ; et envoyer une requête de contrôle de crédit comportant l'écriture de compte de caisse et l'écriture de compte de ressources gratuites, à un centre de gestion de solde de compte de telle sorte que le centre de gestion de solde de compte réalise une comptabilité analytique en fonction de l'écriture de compte de caisse et de l'écriture de compte de ressources gratuites ; et
le centre de gestion de solde de compte (62), configuré pour recevoir la requête de contrôle de crédit envoyée par l'appareil de facturation, dans lequel la requête de contrôle de crédit comprend l'écriture de compte de caisse et l'écriture de compte de ressources gratuites ; réaliser une comptabilité analytique en fonction de l'écriture de compte de caisse et de l'écriture de compte de ressources gratuites ; et envoyer une réponse de contrôle de crédit à l'appareil de facturation, dans lequel la réponse de contrôle de crédit comprend une unité de service sur laquelle la comptabilité a été réalisée.
